**Europäisches Patentamt**

**European Patent Office**

**Office européen des brevets**

(11) Veröffentlichungsnummer: **0 259 794**
**B1**

(12) **EUROPÄISCHE PATENTSCHRIFT**

(45) Veröffentlichungstag der Patentschrift:
25.04.90

(51) Int. Cl.⁴: **F16J 15/12**

(21) Anmeldenummer: 87112942.5

(22) Anmeldetag: 04.09.87

(54) Flachdichtung.

(30) Priorität: 12.09.86 DE 3631052

(43) Veröffentlichungstag der Anmeldung:
16.03.88 Patentblatt 88/11

(45) Bekanntmachung des Hinweises auf die Patenterteilung:
25.04.90 Patentblatt 90/17

(84) Benannte Vertragsstaaten:
DE ES FR GB IT SE

(56) Entgegenhaltungen:
EP-A- 0 185 152
EP-A- 0 192 042
DE-A- 2 536 939
DE-A- 2 803 932
DE-A- 3 403 875

(73) Patentinhaber: Klinger AG, Baarerstrasse 10,
CH-6301 Zug(CH)

(72) Erfinder: Hein, Wolfgang, Dipl.-Ing., Oranienstrasse 9,
D-6270 Idstein/Taunus(DE)

(74) Vertreter: Sparing Röhl Henseler Patentanwälte
European Patent Attorneys, Rethelstrasse 123,
D-4000 Düsseldorf 1(DE)

**Beschreibung**

Die Erfindung betrifft eine Flachdichtung, insbesondere eine Zylinderkopfdichtung, die zwischen Öffnungen aufweisenden Dichtflächen einspannbar ist.

Aus der DE-A-2 803 932 ist eine derartige Flachdichtung mit Außenschichten aus Weichstoff und an Weichstoffrändern des Brennraums etwa mittels Siebdruck oder in sonstiger Weise aufgebrachten Auflagen auf Kunststoff bekannt. Dies soll dazu dienen, eine imprägnierte Zylinderkopfdichtung mit weitgehender Imprägniermittelfreiheit sowie verbesserter Mikro- und Mikroabdichtung im Bereich der Brennraumdurchgänge zu erzielen, weshalb die übliche Metallbewehrung durch beidseitige Kunststoffauflagen auf den Dichtflächen im Bereich der Brennraumränder ersetzt wird.

Außerdem ist es aus der DE-A-2 536 939 bekannt, wiederum an thermisch hochbeanspruchten Stellen wie Brennraum und Ölabdichtungsbereich zur Vermeidung der metallischen Einfassungen Einlageringe aus Graphit vorzusehen, wobei ein Dichtringhalter vorgesehen ist, der in einer Flanschdichtung eine Bohrung aufweist, in welcher der Außenumfang des Einlagerings eingepaßt ist.

Bei Zylinderkopfdichtungen für Otto- bzw. Dieselmotoren wird häufig der Wasser- und Ölkreislauf durch eine gezielte Dimensionierung der Bohrungen bzw. Formlöcher im Bereich der nicht unter Pressung stehenden Dichtflächen gesteuert. Auch werden zur Vermeidung von örtlichen Temperaturspitzen (Dampfblasenbildung) kleine Bohrungen in der nicht unter Pressung stehenden Dichtfläche angebracht. Werden nun an diesen Bohrungen (Öffnungen) durch das strömende Medium Weichstoffteilchen abgelöst, so ändern sich die Strömungsver hältnisse im Kühlkreislauf, und es kann zu einem Ausfall des Motors kommen. Außerdem besteht die Gefahr einer Verstopfung des Thermostaten und des Ölansaugfilters in der Ölwanne.

Um diese Ablösung von Weichstoffteilchen in den Griff zu bekommen, ist es aus der DE-A-3 403 875 bekannt, die Außenschicht der Flachdichtung vorzuverdichten.

Aufgabe der Erfindung ist es, eine Dichtung der eingangs genannten Art zu schaffen, bei der das Ablösen von Weichstoffteilchen, die in den Öl- bzw. Wasserkreislauf gelangen können, vermieden wird.

Diese Aufgabe wird dadurch gelöst, daß jene Teile der Außenschichten der Flachdichtung, die dazu bestimmt sind, unabgedeckt im Bereich einer Dichtfläche zu verlaufen und/oder den Rand einer solchen Öffnung zu begrenzen, eine gesonderte Beschichtung aufweisen, die gegen die jeweils abzudichtende Flüssigket widerstandsfähig ist.

Im Vergleich zu einer ganzflächigen Beschichtung, die für die Funktion einer Dichtung nachteilig sein kann, kann vorteilhafterweise an jeder Beschichtungsstelle Art und Dimension der Beschichtung entsprechend ihrer lokalen Aufgabe gewählt werden, so daß die einzelnen Beschichtungen unterschiedliche, der gewünschten Flächenpressungsverteilung angepaßte Dicke, Verformbarkeit und/oder Flächenform aufweisen können. Die Konstruktion der Flachdichtung kann somit durch die lokalen Beschichtungen verbessert werden. Auf diese Weise sind sowohl die Nachteile einer ganzflächigen Beschichtung, insbesondere auch von Bördeln vermieden, als auch die Möglichkeit gegeben, Dichtungen mit besserer Flächenpressungsverteilung und gegebenenfalls höheren Bördelüberständen ausbilden zu können.

Die Erfindung wird nachstehend anhand eines in den beigefügten Abbildungen dargestellten Ausführungsbeispiels näher erläutert.

Fig. 1 zeigt eine eingebaute Zylinderkopfdichtung im Grundriß, die auf den Zylinderblock für zwei Zylinder eines Verbrennungsmotor aufgelegt ist.

Fig. 2 zeigt einen Schnitt längs der Linie A-A von Fig. 1 und den Einbau der Zylinderkopfdichtung zwischen den Dichtflächen von Zylinderblock und Zylinderkopf.

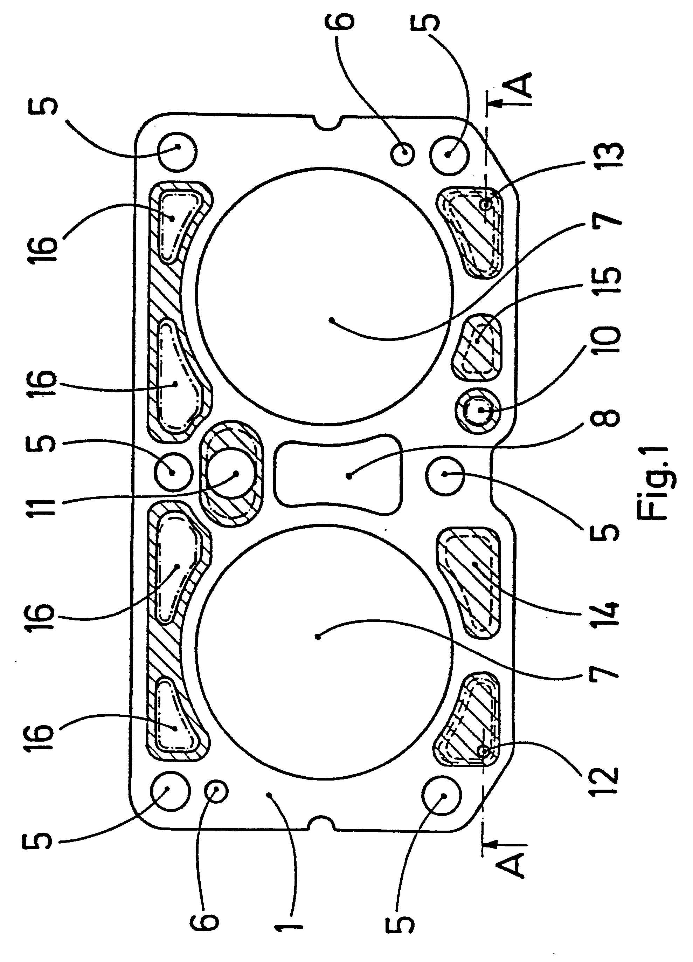

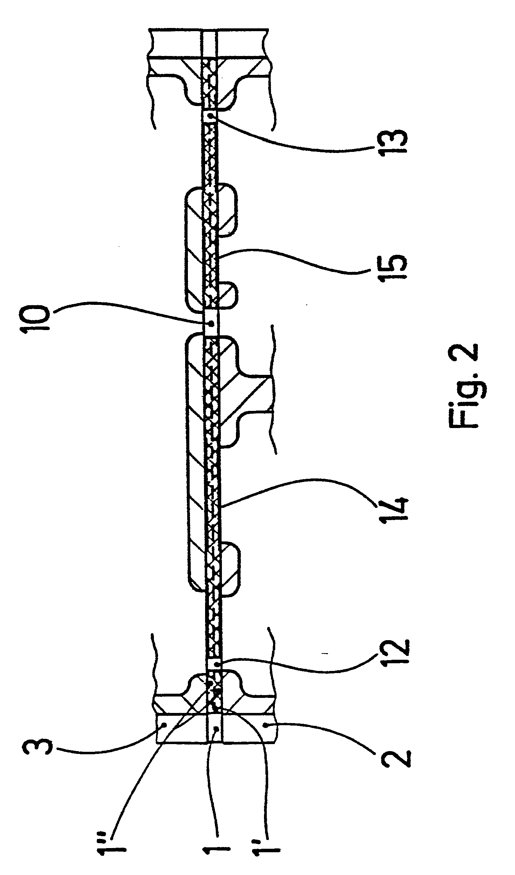

Bei dem dargestellten Ausführungsbeispiel besteht die Zylinderkopfdichtung 1 aus einer gestrichelt angedeuteten Blechlage 1' und beiderseitigen Auflagen 1" aus Weichstoff (Fig. 2). Gemäß Fig. 1 weist die Zylinderkopfdichtung 1 sechs Öffnungen 5 auf, die zum Durchlaß von Stiftschrauben bestimmt sind, welche einen Zylinderblock 2 und einen Zylinderkopf 3 zusammenspannen. Ausserdem sind zwei Öffnungen 6 zum Durchlaß von Zentrierstiften vorgesehen. Zwischen den beiden Öffnungen 7 für die Zylinderbohrungen ist in der Zylinderkopfdichtung 1 noch eine Ausnehmung 8 vorgesehen, die dazu dient, im Bereich zwischen den beiden Zylindern die Dichtungsfläche zu reduzieren und damit eine größere Dichtungspressung zu erzielen.

Alle übrigen aus Fig. 1 ersichtlichen Öffnungen in der Zylinderkopfdichtung 1 dienen zum Durchlaß von Öl und Kühlmittel. Die erfindungsgemäß beschichteten Bereiche um diese Durchlässe sind in Fig. 1 schraffiert, in Fig. 2 durch verdickte Begrenzungslinien für das Schnittbild der Zylinderkopfdichtung 1 dargestellt. Die Öffnungen im Zylinderblock 2, die also unterhalb der Dichtung liegen, sind gestrichelt, wogegen Öffnungen des in Fig. 1 nicht dargestellten Zylinderkopfes 3 strichpunktiert gezeichnet sind.

Die Durchlässe 10 und 11 dienen zur Verbindung von Öldurchlaßöffnungen in Zylinderblock 2 und Zylinderkopf 3. Wie aus Fig. 1 ersichtlich, haben der Durchlaß 10 und die Öffnungen in den Dichtflächen von Zylinderblock 2 und Zylinderkopf 3 den gleichen Durchmesser.

Zur Vermeidung von Loslösungen einzelner Weichstoffteilchen bei gußbedingt versetzten Öffnungen ist ein Randbereich um den Durchlaß 10 der Zylinderkopfdichtung 1 beidseits mit ölfestem Material mittels Siebdruck beschichtet, wobei die Schichtdicke, genaue Form und Härte von der gewünschten Flächenpressungsverteilung auf die Zylinderkopfdichtung 1 und der Strömungsgeschwindigkeit des durchströmenden Mediums abhängig ist. Beim Öldurchlaß 11 ist zwar im Zylinderblock 1 eine entsprechend gleich große, im Zylinderkopf 3 aber eine größere ovale Öffnung vorgesehen. Deshalb

ist ein größerer Bereich der Dichtung 1 beschichtet, damit er auch bei Gußversetzungen die freie Öffnung im Zylinderkopf 3 sicher abdeckt. Die Durchlässe 12 und 13 dienen zur Steuerung des Kühlmediums und sind deshalb bedeutend kleiner als die darunter und darüber liegenden Öffnungen in Zylinderblock 2 bzw. -kopf 3. Die mit kühlmittelbeständigem Material beschichteten Bereiche sind dementsprechend groß. Beschichtete Bereiche 14 und 15 sind auch dort vorgesehen, wo zwar im Zylinderblock 2, nicht aber im Zylinderkopf 3 Öffnungen zum Zutritt des Kühlmediums vorgesehen sind. Auch dort strömt das Kühlmedium an der Zylinderkopfdichtung 1 vorbei und beansprucht es auf Erosion. Den Durchlässen 16 in der Zylinderkopfdichtung 1 sind etwa gleich große Öffnungen in Zylinderblock 2 und Zylinderkopf 3 zugeordnet. Infolge der möglichen Gußversetzungen ist ein Randbereich um diese Öffnungen beschichtet, zusätzlich sind jeweils zwei dieser einem Zylinder zugehörigen Durchlässe einfachheitshalber mit einem zusammenhängenden Beschichtungsbereich abgedeckt.

Wie aus diesem Beispiel zu ersehen, sind alle jene Bereiche der Dichtung 1 beschichtet, die auf jeden Fall direkt mit strömendem Medium beaufschlagt werden, oder die mit den Rändern infolge möglicher Dichtflächenversetzungen in die Öffnungen einer Dichtfläche hineinragen können.

Durch die erfindungsgemäßen Beschichtungen ist nicht nur die Gefahr einer mediumbedingten Erosion samt Loslösung einzelner Weichstoffteilchen sicher verhindert, sondern werden auch Einschränkungen in der Konstruktion oder Dimensionierung vermieden und ein zusätzliches Mittel zur Erzielung einer optimalen Flächenpressung geschaffen.

**Patentansprüche**

1. Flachdichtung, insbesondere Zylinderkopfdichtung (1), die zwichen Öffnungen aufweisenden Dichtflächen einspannbar ist, mit Außenschichten (1″) aus Weichstoff und an Weichstoffrändern mittels Siebdruck aufgebrachten Beschichtungen aus Kunststoff, dadurch gekennzeichnet, daß jene Teile der Außenschichten (1″), die dazu bestimmt sind, unabgedeckt im Bereich einer Dichtfläche zu verlaufen und/oder den Rand einer solchen Öffnung zu begrenzen, eine gesonderte Beschichtung aufweisen, die gegen die jeweils abzudichtende Flüssigkeit widerstandsfähig ist.

2. Flachdichtung nach Anspruch 1, dadurch gekennzeichnet, daß die einzelnen Beschichtungen unterschiedliche, der gewünschten Flächenpressungsverteilung angepaßte Dicke, Verformbarkeit und/oder Flächenform aufweisen.

**Claims**

1. Flat gasket, especially a cylinder head gasket (1), which is arranged to be clamped between contact surfaces having openings with outer layers (1″) of soft material and coatings of plastics material applied to soft material edges by screen printing, characterized in that those parts of the outer layers (1″) which are intended to extend uncovered in the vicinity of a contact surface and/or which define the edge of such an opening, have a separate coating which is resistant to the particular liquid to be sealed off.

2. Flat gasket according to claim 1, characterized in that the individual coatings are of different thickness, deformability and/or surface form matched to the desired surface pressure distribution.

**Revendications**

1. Joint plat, en particulier joint de culasse (1), à insérer entre des surfaces d'étanchéité présentant des orifices, comportant des couches externes (1″) en matière molle et des revêtements de matière plastique déposés par sérigraphie sur les bords en matière molle, caractérisé par le fait que les parties des couches externes (1″) qui sont destinées à ne pas être recouvertes, dans la zone d'une surface d'étanchéité et/ou à délimiter le bord d'un orifice, présentent un revêtement particulier, résistant au fluide à traiter considéré.

2. Joint plat selon la revendication 1, caractérisé par le fait que les différents revêtements présentent une épaisseur, une déformabilité et/ou une forme de surface différentes et adaptées à la répartition souhaitée de la pression superficielle.

Fig.1

Fig. 2

EP 0 259 794 B1